Europäisches Patentamt

European Patent Office

Office européen des brevets

(19)

(11) Publication number: **0 175 800**
**A1**

(12) **EUROPEAN PATENT APPLICATION**

(21) Application number: 84111377.2

(22) Date of filing: 24.09.84

(51) Int. Cl.⁴: **G 11 B 5/265**
**G 11 B 5/31, G 11 B 5/17**
**G 11 B 5/11**

(43) Date of publication of application:
02.04.86 Bulletin 86/14

(84) Designated Contracting States:
DE FR GB NL

(71) Applicant: SONY CORPORATION
7-35 Kitashinagawa 6-Chome Shinagawa-ku
Tokyo 141(JP)

(72) Inventor: Kyonori, Hayakawa
c/o SONY CORP. 7-35, Kitashinagawa
6-chome, Shinagawa-ku, Tokyo(JP)

(74) Representative: Patentanwälte TER MEER - MÜLLER -
STEINMEISTER
Mauerkircherstrasse 45
D-8000 München 80(DE)

(54) Magnetic transducer head.

(57) A magnetic transducer head comprises a first magnetic
pole (10) for recording and/or reproducing signal on a
travelling magnetic recording medium (11), formed of a thin
film of magnetic material facing to the travelling magnetic
recording medium at one end of the thin film and having a
predetermined width corresponding to a recording track
width on the magnetic recording medium; a coil (17) coupled
to the first magnetic pole for recording and/or reproducing
signal on the travelling magnetic recording medium; second
and third magnetic poles (18 a, 18 b) for erasing magnetic
record at peripheral portions of the recording track formed of
thin films of magnetic material each facing to the travelling
magnetic recording medium at one end of the thin film, the
second and third magnetic poles provided remote from the
first pole with a predetermined distance along a travelling
direction of the magnetic recording medium; a coil (21)
coupled to the second and third magnetic poles for erasing
magnetic record; and a coil (40) coupled to the first magnetic
pole to compensate an erasing magnetic field from the
second and third magnetic poles in the first magnetic pole.

FIG.9

FIG.IO

Specification

TITLE OF THE INVENTION

MAGNETIC TRANSDUCER HEAD

BACKGROUND OF THE INVENTION

Field of the Invention

The present invention relates to a signal pole type combination magnetic transducer head for perpendicular mode recording, which is suitably applied to a recording and/or reproducing head of a flexible disc device to use, for example, a flexible disc as a magnetic recording medium.

Description of the Prior Art

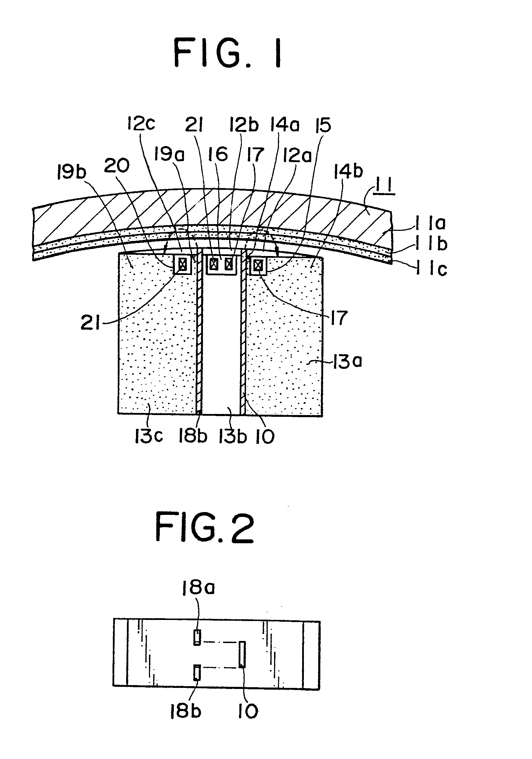

A single pole type combination magnetic transducer head for perpendicular mode recording as shown in Figs. 1 and 2, which is suitably applied to a recording and/or reproducing head of a flexible disc device to use, for example, a flexible disc as a magnetic recording medium has been already proposed in international patent application No. PCT/JP84/00110 of the assignee of the present invention. In Figs. 1 and 2, numeral 10 designates a main magnetic pole for recording and/or reproducing signal, formed of a thin film of soft magnetic material and having one end of a predetermined width facing to a magnetic recording medium 11. The recording and/or reproducing main magnetic pole 10 is grasped at the end facing to the magnetic recording medium 11 by non-magnetic guard members 12a and 12b of a predetermined thickness integrally from both sides, and a magnetic core 13a and a non-magnetic body 13b abut on rear side of the non-magnetic guard members 12a and 12b and grasp the recording and/or reproducing main magnetic pole 10 integrally from both sides. In this case, the magnetic core 13a installed at rear side of the non-magnetic guard member 12a constitutes a return path for magnetic flux of the recording and/or reproducing main magnetic pole 10. The magnetic core 13a is provided near the recording and/or reproducing main magnetic pole 10 at side abutting on the non-magnetic guard member 12a with a groove 15 so as to separate an auxiliary magnetic pole 14a near the recording and/or reproducing main magnetic pole 10 from a return path part 14b to constitute a return path for magnetic flux of the main magnetic pole 10. Also the non-magnetic body 13b is provided at side abutting on the non-magnetic guard member 12b with a predetermined groove 16, and through these grooves 15, 16 a recording and/or reproducing winding 17 is applied to the recording and/or reproducing main magnetic pole 10. The magnetic recording medium 11 used in this case is composed of, for example, a plastic base 11a, a layer 11b of material having high permeability formed on the base 11a, and a perpendicular mode recording layer 11c formed on the layer 11b.

Numerals 18a and 18b designate tunnel erasing main magnetic poles, each formed of a thin film of soft magnetic material and disposed at downstream side of the recording and/or reproducing main magnetic pole 10, and the tunnel erasing magnetic poles 18a and 18b are arranged with each other at distance less than width of the recording and/or reproducing main magnetic pole 10. In this case, the tunnel erasing main magnetic poles 18a, 18b arranged at the distance less than the width of the recording and/or reproducing main magnetic pole 10 are on the abutting surface of the non-magnetic guard member 12b and the non-magnetic body 13b at opposite side to surface where the recording and/or reproducing main magnetic pole 10 is grasped, so that the tunnel erasing main magnetic poles 18a, 18b are grasped from both sides by the non-magnetic guard member 12b, the non-magnetic body 13b, and a non-magnetic guard member 12c and a magnetic core 13c abutted on rear side of the guard member 12c. The magnetic core 13c constitutes a return path for magnetic flux of the tunnel erasing main magnetic poles 18a, 18b. The magnetic core 13c is provided near the tunnel erasing main electrodes 18a, 18b at side abutting on the non-magnetic guard member 12c with a groove 20 so as to separate an auxiliary magnetic pole 19a near the tunnel erasing main magnetic poles 18a, 18b from a return path part 19b to constitute a return path for magnetic flux of the main magnetic poles 18a, 18b. An erasing winding 21 is applied to the tunnel erasing main electrodes 18a, 18b through the groove 20 and the groove 16 of the non-magnetic body 13b.

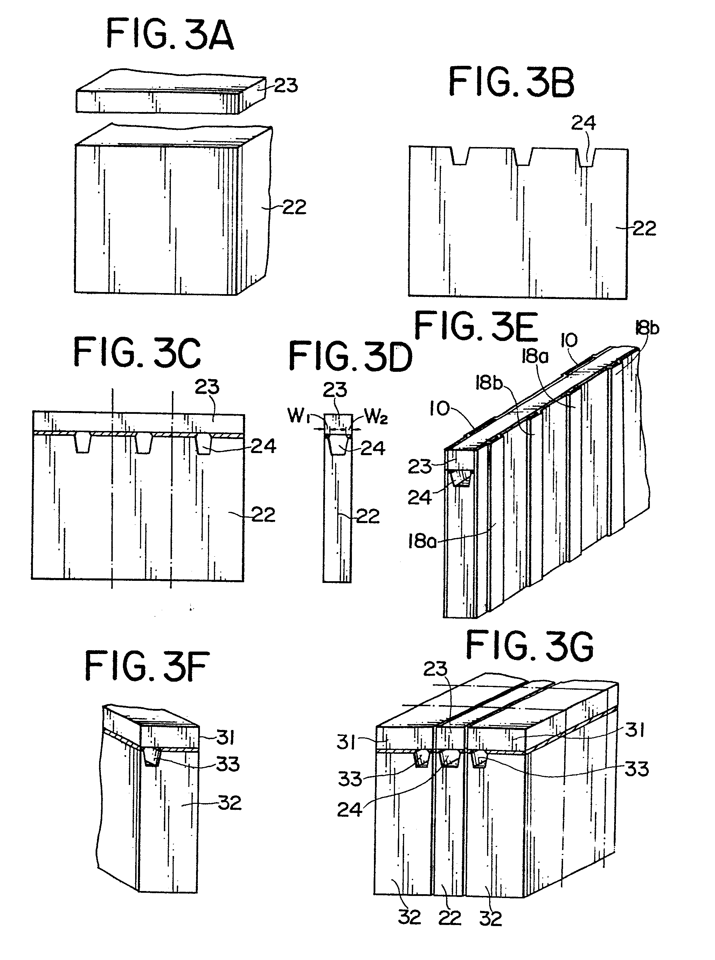

Process of manufacturing such a single pole type combination magnetic transducer head for perpendicular mode recording will now be described referring to Fig. 3 and so forth. First, two non-magnetic block substances 22 and 23 are prepared as shown in Fig. 3A. The non-magnetic block substances 22 and 23 are preferably made of material being fine-grained, similar to ferrite in thermal expansion coefficient and hard, for example, non-magnetic ferrite (Zn ferrite, forsterite, fotoceram, crystallized glass, barium titanate, calcium titanate, ceramics of $Al_2O_3$ - TiC series, $ZrO_2$ or the like). Grooves 24 to be made winding holes 16 later are formed at predetermined intervals on one non-magnetic block substance 22 (Fig. 3B), and then the grooved surfaces are ground in mirror finish. Other non-magnetic block substance 23 is also ground in mirror finish. Both non-magnetic block substances are adhered to each other by means of glass fusion, an organic adhesive agent such as epoxy resin, an inorganic adhesive agent such as water glass or the like (Fig. 3C). Intermediate portions between the grooves 24 are cut in parallel to the grooves 24 and the cutting surfaces are ground in mirror finish. In this case, the core thickness ($W_1$, $W_2$) on position of the winding hole 16 is important because it defines the winding diameter. Since the winding diameter is preferably as small as possible in order to improve the recording and/or reproducing sensitivity, the core is preferably as thin as possible. Consequently, the core may be made thin as long as it is allowable in the mechanical strength and the machining workability. For example, the core thickness may be 100 m or less, preferably 50 m or less. Since the sensitivity is

-6-

particularly required at the recording and/or reproducing winding side, the core should be made thin. Since the sensitivity is not so required at the tunnel erasing side as at the recording and/or reproducing side, the core may be made thin at the recording and/or reproducing side and thick at the tunnel erasing side so as to hold the intensity as a whole. The grinding surface and a lateral surface (front side in Fig. 3D) are made perpendicular at high precision and breakage on the edge portion is reduced, thereby the edge appears, correctly. For example, if the front surface in Fig. 3B is first ground in mirror finish and then a groove is formed on the surface in perpendicular at high precision, above-mentioned condition can be realized comparatively easily.

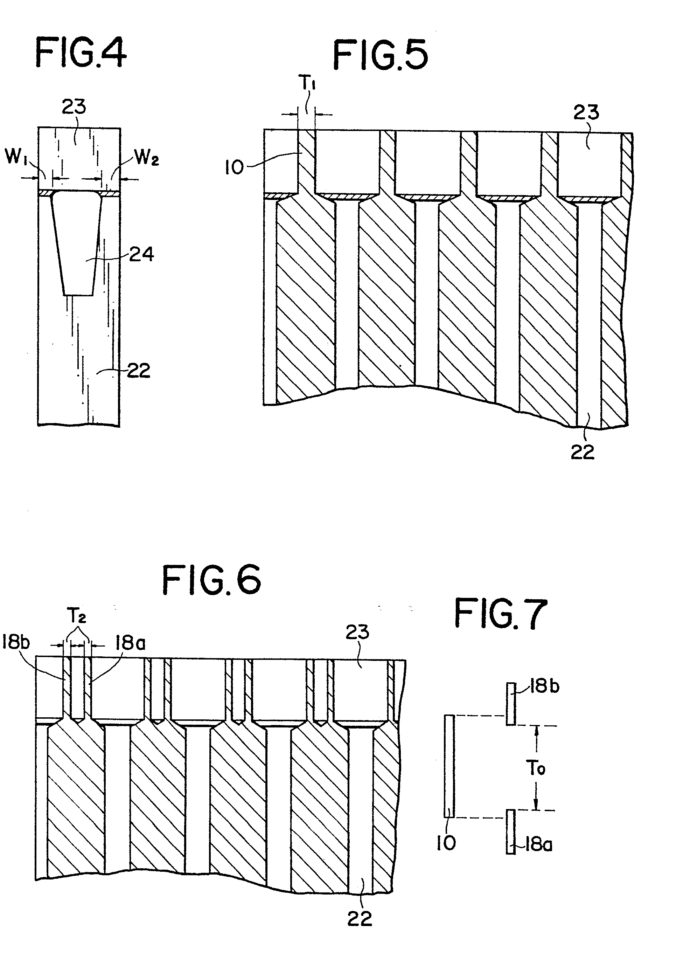

A recording and/or reproducing main magnetic pole 10 and tunnel erasing main magnetic poles 18a, 18b are formed on the surface in mirror finish as shown in Fig. 3E. A film of $SiO_2$, $Si_3N_4$, $Al_2O_3$, $ZrO_2$ or the like is applied to both grinding surfaces at thickness of about 0.1 - 1.0 m by means of sputtering, evaporation, ion plating or the like. Condition to apply the film as fine-grained as possible is preferable. The film need not always be applied, but magnetic characteristics of a magnetic thin film on the film can be improved as effect by applying the film. To one surface (If $W_1$ and $W_2$ are

not equal in Fig. 3D and Fig. 4, surface at smaller side, i.e. at $W_1$ side is preferable.) is applied a magnetic thin film (magnetic film of high permeability such as permalloy, sendust alloy or amorphous magnetic alloy of Co - Zr or Co - Zr - Nb) to be made the recording and/or reproducing film at thickness of about 0.05  m -3  m by means of sputtering, evaporation, ion plating, metal plating or the like. The thickness is determined in consideration of necessary resolution and recording and/or reproducing sensitivity. Thickness of about 0.1  m - 0.5 m is practicable. The magnetic film is formed in stripe of predetermined track width and distance using photo lithography technique. In this case, the stripe is located at a predetermined position from the reference end for the alignment with the tunnel erasing main magnetic poles 18a, 18b to be installed later. The magnetic film need not be formed in stripe but may be widened at rear side from the abutting portion as shown in Fig. 5. this constitution provides the high sensitivity. A hard film of $SiO_2$, $Si_3N_4$, $Al_2O_3$

as a protective film is applied at thickness of about 0.1  m -3  m onto the magnetic film by means of sputtering, evaporation, ion plating or the like. a magnetic thin film such as permalloy, sendust alloy, or amorphous magnetic alloy of Co - Zr or Co - Zr - Nb to be made a tunnel erasing main magnetic pole is applied at thickness of about 0.1 - 5 m onto the surface at opposite side by means of sputtering, evaporation, ion plating, metal plating or the like. The thickness is set to provide the best erasing sensitivity, but in most cases the thickness of about 0.5 - 1 m is suitable. Next, etching is performed at a predetermined width corresponding to the recording and/or reproducing magnetic film onto a pair of magnetic films in stripe. A hard film of $SiO_2$, $Si_3N_4$ or $Al_2O_3$ as a protective film is applied at thickness of about 0.1 m - 3 m onto the magnetic film by means of sputtering, evaporation, ion plating or the like. The tunnel erasing magnetic film may be formed in configuration as shown in Fig. 6.

Fig. 7 shows relation of mutual position between the recording and/or reproducing main magnetic pole 10 and the tunnel erasing main magnetic poles 18a, 18b. Width $T_1$ of the recording and/or reproducing main magnetic pole 10 is larger than distance $T_0$ between the tunnel erasing main magnetic poles 18a, 18b. Since recording is performed at the recording and/or reproducing main magnetic pole 10 and then the end of
the recording is erased at the tunnel erasing main
magnetic poles 18a, 18b, the track width to be finally
recorded becomes equal to the distance $T_0$ between the
tunnel erasing main magnetic poles 18a, 18b and the
recording and/or reproducing main magnetic pole 10 and
the tunnel erasing main magnetic poles 18a, 18b must be
aligned at high precision.  The recording and/or
reproducing main magnetic pole 10 is first aligned from
the end of the substrate at high precision and then the
tunnel erasing main magnetic poles 18a, 18b are aligned
from the end as reference point.  Therefore the lateral
surface as reference plane must be perpendicular and
have the sharp edge as already described.  In another
aligning method, a transparent substrate is used (Either
one transparent substrate will do because of the
abutting.) and when second patterning of the magnetic
pole is performed the pattern position may be confirmed
from the rear side.

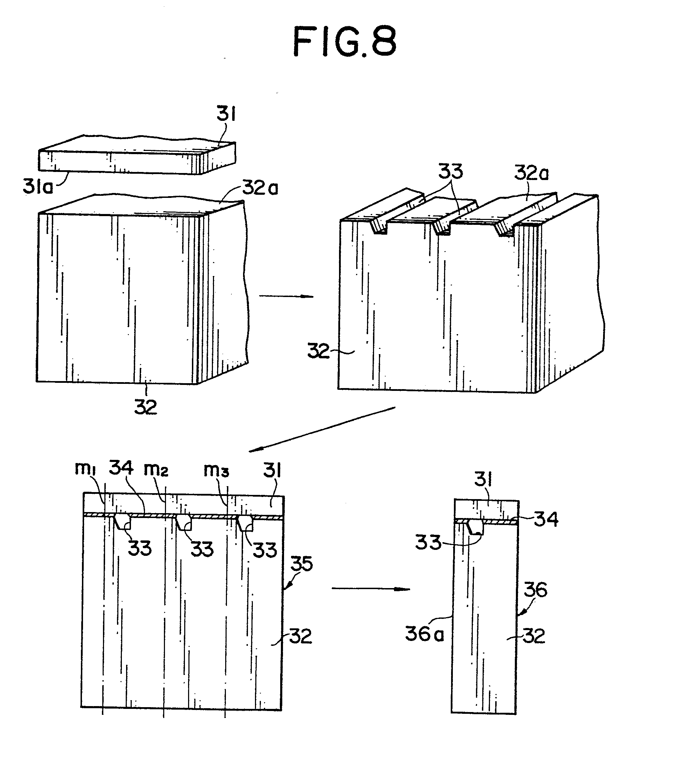

Next, a composite block shown in Fig. 3F is
prepared.  The composite block is fabricated as shown in
Fig. 8.  Referring to Fig. 8, a non-magnetic plate block
31 and a magnetic block 32 are first prepared.  The non-
magnetic plate block 31 may be made of non-magnetic ferrite (Zn ferrite), fersterite, fotoceram, crystallized glass, barium titanate, calcium titanate or ceramics of $Al_2O_3$ - TiC series, and the magnetic block 32 may be made of ferrite of Mn - Zn series or Ni - Zn series. Since the non-magnetic plate block 31 and the magnetic block 32 are required to be similar in the thermal expansion coefficient, the non-magnetic block 31 and the magnetic block 32 are preferably made of non-magnetic ferrite and magnetic ferrite, respectively. Each one surface of the non-magnetic plate block 31 and the magnetic block 32 is ground in mirror finish. Grooves 33 are formed at predetermined intervals on the mirror finish surface 32a of the magnetic block 32. In this state, the mirror finish surface 31a of the non-magnetic plate block 31 is faced and adhered to the mirror finish surface 32a of the magnetic block 32. The adhesion may e performed by means of glass fusion or an adhesive agent 34 such as epoxy adhesive agent, an inorganic adhesive agent such as water glass. In this case, however, glass fusion is preferable and since glass fusion may be performed again at subsequent process the glass of high temperature enough not to be melted at the second fusion is used. An abutting body 35 of the non-magnetic plate block 31 and the magnetic block 32 is cut along planes shown by dash-and-dot lines ml, m2, m3 ... into a required thickness crossing the non-magnetic plate block 31 and the magnetic block 32 thereby one composite block 36 is cut away. The composite block is adhered from both sides in Fig. 3E by means of glass fusion, an organic adhesive agent such as epoxy resin or an inorganic adhesive agent such as water glass (Fig. 3G). And then the cutting is performed along dash-and-dot line into each head and the slide surface is ground and the winding is performed as shown in Fig. 1.

If the above-mentioned single pole type combination magnetic transducer head for perpendicular mode recording is used for example in a recording and/or reproducing head of a flexible disc device and recording is performed on the magnetic recording medium, recording signal is supplied to a recording and/or reproducing winding 17 of the recording main magnetic pole 10 and perpendicular mode magnetic recording is performed by the recording and/or reproducing main magnetic pole 10 and erasing current (DC) is supplied to an erasing winding 21 of the tunnel erasing main magnetic poles 18a, 18b thereby both sides of the recording track are erased. Consequently, even if deviation of the track is produced based on slight deviation of the magnetic recording medium 11 at installing state or the expansion state or the expansion and contraction by the temperature variation, the previous data at rewriting state does not remain without erasing but the correct data can be obtained at reproducing state.

In the single pole type combination magnetic transducer head for perpendicular mode recording, however, since recording signal is supplied to the recording and/or reproducing main magnetic pole 10 and also erasing current is supplied to the tunnel erasing main magnetic poles 18a, 18b at the recording state, influence of leakage flux from the tunnel erasing main magnetic poles 18a to the recording signal must be considered. Particularly distance between the recording and/or representing and/or reproducing main magnetic pole 10 and the tunnel erasing main magnetic poles 18a, 18b is required to be small from the viewpoint of recording trace on the magnetic recording medium 11 and good contracting. However, the smaller the distance, the greater the influence of the leakage flux from the tunnel erasing main magnetic poles 18a, 18b. This results in disadvantages in the prior art.

−13−

## SUMMARY OF THE INVENTION

It is an object of the present invention to provide an improved magnetic transducer head having a recording and/or reproducing head portion and an erasing head portion.

It is another object of the present invention to provide an improved magnetic transducer head having a recording and/or reproducing head portion and an erasing head portion in which each head portion is formed of thin film magnetic pole.

It is further object of the present invention to provide a magnetic transducer head having a recording and/or reproducing head portion and an erasing head portion, in which influence of erasing magnetic field on the recording and/or reproducing head portion is decreased.

A magnetic transducer head of the present invention comprises a first magnetic pole for recording and/or reproducing signal on a travelling magnetic recording medium, formed of a thin film of magnetic material facing to the travelling magnetic recording medium at one end of the thin film and having a predetermined width corresponding to a recording track width on the magnetic recording medium; a coil coupled to the first magnetic pole for recording and/or reproducing signal on the travelling magnetic recording medium; second and third magnetic poles for erasing magnetic record at peripheral portions of the recording track formed of thin films of magnetic material each facing to the travelling magnetic recording medium at one end of the thin film, the second and third magnetic poles provided remote from the first magnetic pole with a predetermined distance along a travelling direction of the magnetic recording medium; a coil coupled to the second and third magnetic poles for erasing magnetic record; and a coil coupled to the first magnetic pole to compensate an erasing magnetic field from the second and third magnetic poles in the first magnetic pole.

## BRIEF DESCRIPTION OF THE DRAWINGS

Fig. 1 is a sectional view of an example of a single pole type combination magnetic transducer head for perpendicular mode recording;

Fig. 2 is a top view of Fig. 1;

Fig. 3 is a diagram illustrating process of manufacturing a single pole type combination magnetic transducer head for perpendicular mode recording;

Fig. 4, Fig. 5, Fig. 6, Fig. 7 and Fig. 8 are diagrams explaining Fig. 3;

Fig. 9 is a sectional view of a single pole type combination magnetic transducer head for perpendicular mode recording as an embodiment of the invention;

Fig. 10 is a diagram explaining an essential part of Fig. 9;

Fig. 11 is a diagram explaining another essential part of Fig. 9; and

fig. 12 is a partly cutaway perspective view of another embodiment of the invention.

## DESCRIPTION OF THE PREFERRED EMBODIMENTS

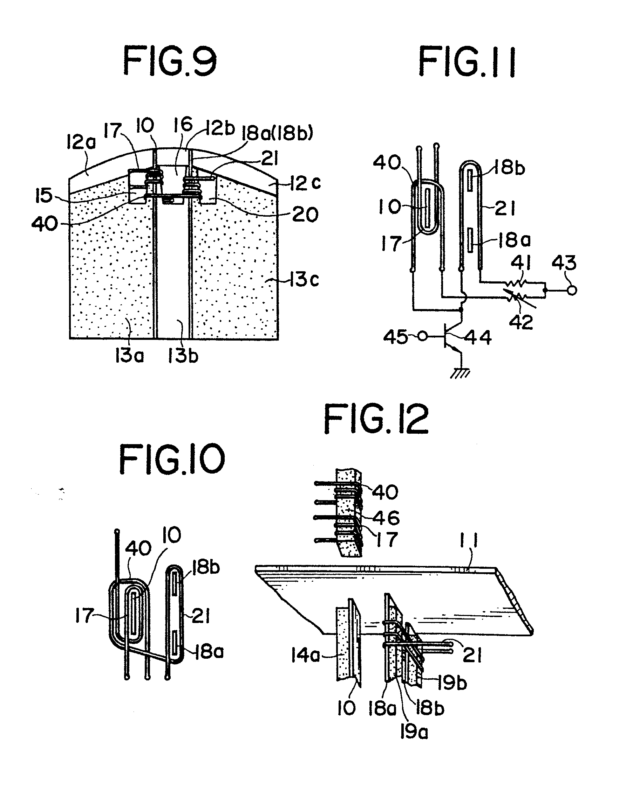

A single pole type combination magnetic transducer head for perpendicular mode recording as an embodiment of the invention will now be described referring to Fig. 9. In Fig. 9, parts corresponding to Fig. 1 are designated by the same reference numerals and detailed description thereof shall be omitted.

In Fig. 9, an erasing winding 21 is applied to tunnel erasing main magnetic poles 18a, 18b, and a wire in extension of the erasing winding 21 is wound as a compensating winding 40 to a recording and/or

-16-

reproducing main magnetic pole 10 as shown in Fig. 10
thereby erasing current is supplied in similar manner to
Fig. 1. In this case, the compensating winding 40 is
set to the winding direction and the winding number so
that leakage flux from the tunnel erasing main magnetic
poles 18a, 18b is canceled. This embodiment has similar
constitution to that of Fig. 1 except for above
description.

Since the embodiment is constituted as above
described, leakage flux to the recording and/or
reproducing main magnetic pole 10 from the tunnel
erasing main magnetic poles 18a, 18b is canceled at the
recording state by flux from the compensating winding
40, thereby the leakage flux from the tunnel erasing
main magnetic poles 18a, 18b does not effect the
recording signal. Of course, similar working effect is
produced in Fig. 9 as in Fig. 1.

The compensating winding 40 applied to the
recording and/or reproducing main magnetic pole 10 may
be connected in parallel to the erasing winding 21 as
shown in Fig. 11. The erasing winding 21 and the
compensating winding 40 are connected at each one end to
a resistor 41 and a variable resistor 42 respectively,
and commonly connected at each other end to collector of npn transistor 44. Emitter of the transistor 44 is earthed, and control signal is supplied to an input terminal 45 led from base of the transistor 44 so that the transistor 44 is turned ON at the recording state. In the constitution a shown in Fig. 11, resistance value of the variable resistor 42 is adjusted irrespective of the winding number of the compensating winding 40, thereby leakage flux from the tunnel erasing main magnetic poles 18a, 18b can be canceled well. Consequently, this constitution is advantageous in the viewpoint of designing and manufacturing.

Fig. 12 shows another embodiment of the invention. In order to energize the main magnetic pole 10 as magnetic transducer head for perpendicular mode recording, auxiliary magnetic pole energizing type has been previously proposed where an auxiliary magnetic pole 46 with a recording and/or reproducing winding 17 applied thereto is installed to the main magnetic pole 10 through a magnetic recording medium 11 interposed between the main magnetic pole 10 and the auxiliary magnetic pole 46. Fig. 12 discloses application of the invention to the auxiliary magnetic pole energizing type. In this case, the compensating winding 40 is provided on the auxiliary magnetic pole 46, and suitable

-18-

current to cancel the leakage flux from the tunnel erasing main magnetic poles 18a, 18b is supplied to the compensating winding 40. It is clearly understood that constitution in Fig. 12 has working effect similar to Fig. 9.

The present invention is not restricted to above mentioned embodiments, but other various constitutions may be taken within the subject-matter of the invention.

According to the present invention, influence of the leakage flux from the tunnel erasing main magnetic poles 18a, 18b to the recording signal can be eliminated.

# C L A I M :

A magnetic transducer head comprising:

a first magnetic pole (10) for recording and/or reproducing signal on a travelling magnetic recording medium (11), formed of a thin film of magnetic material facing to said travelling magnetic recording medium (11) at one end of said thin film and having a predetermined width corresponding to a recording track width on said magnetic recording medium;

a coil (17) coupled to said first magnetic pole for recording and/or reproducing signal on said travelling magnetic recording medium;

second and third magnetic poles (18 a, 18 b) for erasing magnetic record at peripheral portions of said recording track formed of thin films of magnetic material each facing to said travelling magnetic recording medium (11) at one ends of said thin films, said second and third magnetic poles provided remote from said first magnetic pole with a predetermined distance along a travelling direction of said magnetic recording medium;

a coil (21) coupled to said second and third magnetic poles for erasing magnetic record on said magnetic recording medium; and

a coil (40) coupled to said first magnetic pole to compensate an erasing magnetic field from said second and third magnetic poles in said first magnetic pole.

# FIG. I

12c  21  12b  14a  15
19a  16  17  12a
19b  20              14b   11

11a
11b
11c

21

13a

13c  18b  13b  10

# FIG.2

18a

18b   10

# FIG.3A

23

22

# FIG.3B

24

22

# FIG.3C

23

24

22

# FIG.3D

23

$W_1$  $W_2$

24

22

# FIG.3E

18a  10  18b

18b  10

23

24

18a

# FIG.3F

31

33

32

# FIG.3G

23

31  31

33  33

24

32  22  32

# FIG.4

# FIG.5

# FIG.6

# FIG.7

0175800

# FIG.8

## FIG.9

## FIG.11

## FIG.10

## FIG.12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 099 831 (VERTIMAG SYSTEMS CORP.) <br> * Abstract; figure 1 * | 1 | G 11 B 5/265 <br> G 11 B 5/31 <br> G 11 B 5/17 <br> G 11 B 5/11 |
| Y | PATENTS ABSTRACTS OF JAPAN, vol. 6, no. 183 (P-143)[1061], 18th September 1982; & JP - A - 57 98124 (TOKYO SHIBAURA DENKI K.K.) 18-06-1982 <br> * Abstract * | 1 | |
| A | EP-A-0 039 090 (TOKYO SHIBAURA DENKI K.K.) <br> * Page 10, lines 2-27; figures 4,5 * | 1 | |
| A | PATENTS ABSTRACTS OF JAPAN, vol. 6, no. 175 (P-141)[1053], 9th September 1982; & JP - A - 57 92416 (SUWA SEIKOSHA K.K.) 09-06-1982 <br> * Abstract * | 1 | TECHNICAL FIELDS SEARCHED (Int. Cl.4) <br><br> G 11 B |
| A | JP-A-59 124 016 (SONY K.K.) <br> * Whole document * & PATENTS ABSTRACTS OF JAPAN, vol. 8, no. 252 (P-314)[1689], 17th November 1984 | 1 | |

--- -/-

The present search report has been drawn up for all claims

| Place of search THE HAGUE | Date of completion of the search 20-05-1985 | Examiner FUX J. |
|---|---|---|

European Patent Office

**EUROPEAN SEARCH REPORT**

**0175800**
Application number

EP 84 11 1377

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| E | PATENTS ABSTRACTS OF JAPAN, vol. 8, no. 245 (P-312)[1682], 10th November 1984; & JP - A - 59 117 727 (NIPPON DENKI K.K.) 07-07-1984 * Abstract * | 1 | |
| | --- | | |
| L | PATENTS ABSTRACTS OF JAPAN, vol. 9, no. 37 (P-335)[1760], 16th February 1985; & JP - A - 59 177 714 (SONY K.K.) 08-10-1984 * Abstract * | 1 | |
| | ----- | | |

TECHNICAL FIELDS SEARCHED (Int. Cl.4)

The present search report has been drawn up for all claims

| Place of search | Date of completion of the search | Examiner |
|---|---|---|
| THE HAGUE | 20-05-1985 | FUX J. |